# EUROPEAN PATENT APPLICATION

(11) **EP 4 250 212 A1**
(43) Date of publication of application: **27.09.2023**
(21) Application number: 22190050.9
(22) Date of filing: 11.08.2022
(51) Int. Cl.: G06Q 30/018, G06Q 20/38, G06Q 20/06, G06Q 30/0601

(54) **METHOD, APPARATUS, AND COMPUTER-READABLE MEDIUM FOR CERTIFYING AUTHENTICITY OF A SCORING BALL IN A SPORTS GAME**

(30) Priority: 22.03.2022 US 202263269729 P; 06.04.2022 US 202263362563 P; 08.04.2022 US 202263362673 P; 17.06.2022 US 202263353386 P
(71) Applicant: Gol-Ball Inc., Miami, FL 33130 (US)
(72) Inventor: RODRIGUEZ, Andres, Miami, 33130 (US)
(74) Representative: Reed Smith LLP

(57) **Abstract**

A system, method, and computer-readable medium for certifying authenticity of a scoring ball in a sports game, the method including storing a plurality of unique identifiers corresponding to a plurality of game balls, each unique identifier corresponding to a unique game ball in the plurality of game balls, receiving a message indicating a scoring event, the message comprising a scoring ball unique identifier, identifying a game ball in the plurality of game balls based at least in part on the scoring ball unique identifier, and generating a scoring record designating the identified game ball as a scoring ball, the scoring record being linked to the scoring ball unique identifier.

## Description

### FIELD

The present invention relates to a method, an apparatus, and a computer-readable medium for certifying authenticity of a scoring ball in a sports game.

### BACKGROUND

The most important aspect in the sport of soccer (i.e., "football" or "association football" outside of the United States) is a goal. Typically, after 90 minutes played, an average game will have no more than 3 goals scored. Surprisingly, there is no current category in soccer memorabilia that uniquely identifies a goal-scoring soccer ball. Currently, there is no reliable way of identifying and authenticating a soccer ball that was used to score a goal, leading to uncertainty in the memorabilia market and a lack of certified "goal soccer balls." In soccer games globally, goal soccer balls are immediately reused, making it virtually impossible to identify the ball used to score the goal as they are generally interchanged with other official soccer balls used throughout the match.

There are no systems in any soccer league in the world to uniquely identify a goal soccer ball. As there are multiple official soccer balls being rotated during a game, when a goal is scored, it is unclear which exact soccer ball was used to score the goal. Typically, the ball used to score a goal is immediately put back into play in the next restart of the game. The goal soccer ball will almost always be changed as the game progresses with one or more of the game-ready soccer balls. This lack of certainty leads to uncertainty in any potential claim being made regarding the authenticity of a given soccer ball as being a goal soccer ball. Even if a ball were to be removed from a game, there is no system to guarantee that a given ball was used in any of the goals scored during the match. As a result, it is difficult for owners of authentic scoring balls to prove their authenticity, impeding transferability of the memorabilia. Similar problems exist in other sports with scoring balls or scoring items, such as tennis, hockey, etc.

### SUMMARY

The inventor(s) has/have recognized that improvements are needed in systems for certifying authenticity of a scoring ball in a sports game. Accordingly, the inventor(s) propose(s) a method executed by one or more computing devices for certifying authenticity of a scoring ball in a sports game, the method comprising:
- storing a plurality of unique identifiers corresponding to a plurality of game balls, each unique identifier corresponding to a unique game ball in the plurality of game balls;
- receiving a message indicating a scoring event, the message comprising a scoring ball unique identifier;
- identifying a game ball in the plurality of game balls based at least in part on the scoring ball unique identifier; and
- generating a scoring record designating the identified game ball as a scoring ball, the scoring record being linked to the scoring ball unique identifier.

### BRIEF DESCRIPTION OF THE DRAWINGS

Fig. 1 illustrates a flowchart for certifying authenticity of a scoring ball in a sports game according to an exemplary embodiment.
Fig. 2 illustrates an example of the correspondence between unique identifiers and game balls according to an exemplary embodiment.
Fig. 3 illustrates an example of a game ball with a physical representation of a unique identifier according to an exemplary embodiment.
Figs. 4A-4B illustrate example of game balls with physical representations of unique identifiers according to an exemplary embodiment.
Fig. 5 illustrates an example of the scoring ball message sending and receiving process according to an exemplary embodiment.
Fig. 6 illustrates an example of the game ball identification process and scoring record generation process according to an exemplary embodiment.
Fig. 7 illustrates an example of receiving scoring event data and authenticity data according to an exemplary embodiment.
Fig. 8 illustrates a flowchart for linking the scoring ball to an NFT and transferring ownership of the NFT according to an exemplary embodiment.
Fig. 9 illustrates a flowchart for linking the scoring ball to a plurality of duplicate NFTs and transferring ownership of the duplicate NFTs according to an exemplary embodiment.
Fig. 10 illustrates a flowchart for granting users access to a three dimensional model of a scoring ball according to an exemplary embodiment.
Fig. 11 illustrates a system diagram of the scoring ball database/platform, the corresponding NFTs, and corresponding user access rights according to an exemplary embodiment.
Fig. 12 illustrates a method for retrieving a scoring record according to an exemplary embodiment.
Fig. 13 illustrates an example of a scoring record linked to the scoring ball unique identifier according to an exemplary embodiment.
Fig. 14 illustrates an example of a specialized computing environment that can be used to implement the above-described processes according to an exemplary embodiment.

### DETAILED DESCRIPTION

While methods, apparatuses, and computer-readable media are described herein by way of examples and embodiments, those skilled in the art recognize that methods, apparatuses, and computer-readable media for certifying authenticity of a scoring ball in a sports game are not limited to the embodiments or drawings described. It should be understood that the drawings and description are not intended to be limited to the particular form disclosed. Rather, the intention is to cover all modifications, equivalents and alternatives falling within the spirit and scope of the appended claims. Any headings used herein are for organizational purposes only and are not meant to limit the scope of the description or the claims. As used herein, the word "can" is used in a permissive sense (i.e., meaning having the potential to) rather than the mandatory sense (i.e., meaning must). Similarly, the words "include," "including," and "includes" mean including, but not limited to.

The inventor(s) has/have discovered a novel method, apparatus, and computer-readable medium certifying authenticity of a scoring ball in a sports game. The scoring ball can be, for example, a soccer ball in soccer (internationally known as football), a baseball in the sport of the baseball, a golf ball in golf, a football in American football, a tennis ball in the sport of tennis, a bowling ball, a volleyball, a pool ball, or any other kind of scoring item in a sport or competition. Additionally, although the word "ball" is used, it is understood that this term includes other scoring objects such as a puck in hockey or a birdie/shuttlecock in badminton.

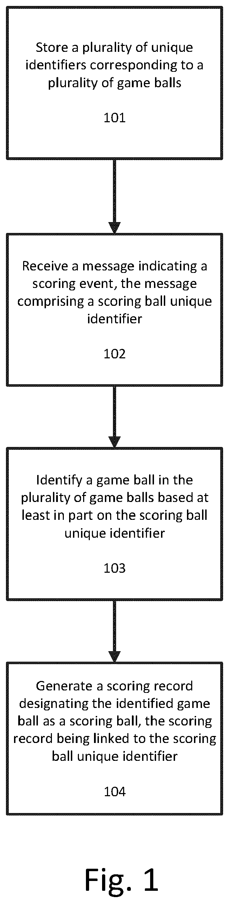

Fig. 1 illustrates a flowchart for certifying authenticity of a scoring ball in a sports game according to an exemplary embodiment. At step 101 a plurality of unique identifiers corresponding to a plurality of game balls are stored. Each unique identifier corresponds to a unique game ball in the plurality of game balls and may be implemented in a number of ways. For example, the plurality of unique identifiers can be a plurality of unique Quick Response (QR) codes, a plurality of unique bar codes, a plurality of unique serial numbers, a plurality of unique radio frequency identifiers, and/or a plurality of unique infrared tags.

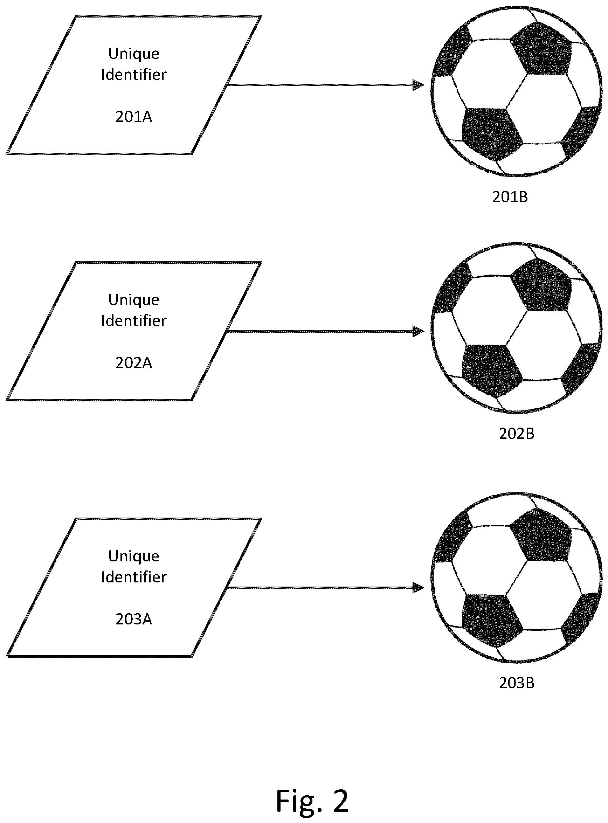

Fig. 2 illustrates an example of the correspondence between unique identifiers and game balls according to an exemplary embodiment. As shown in Fig. 2, unique identifier 201A corresponds to ball 201B, unique identifier 202A corresponds to ball 202B, and unique identifier 203A corresponds to ball 203B. The unique identifiers themselves can be part of a game ball data structure that corresponds to a game ball. Additionally, the unique identifiers can be stored in various formats. For example, the unique identifiers stored by the system can be stored as some computed value based on a unique QR code corresponding to a game ball (e.g., such as hash or other value). In other words, rather than storing the unique identifiers themselves, the system can stored some verification or validation key that confirms the authenticity of a particular unique identifier.

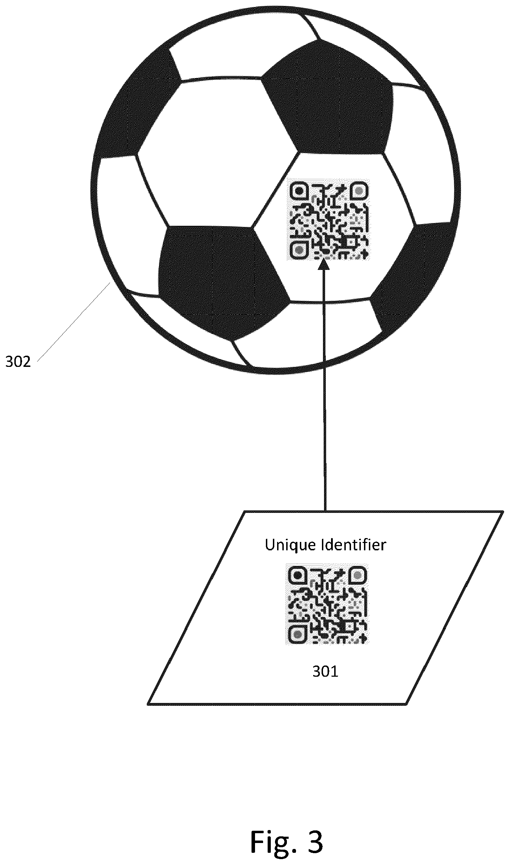

In addition to the unique identifiers stored on the system (e.g., in a memory of a database or server), the each game ball in the plurality of game balls includes a physical representation of the unique identifier corresponding to that game ball. Fig. 3 illustrates an example of a game ball with a physical representation of a unique identifier according to an exemplary embodiment. As shown in Fig. 3, the ball 302 includes a representation of unique QR code 301.

The physical representation of the unique identifier corresponding to each game ball can be integral to that game ball. For example, the unique identifier can be printed directly on the game ball or can be integral to the surface material of the game ball. Additionally or alternatively, the physical representation of the unique identifier corresponding to each game ball can be affixed to that game ball. For example, a self-deforming sticker with the unique identifier can be applied to the game ball. The self-deforming sticker can be constructed such that any attempt to remove the sticker results in the destruction/unusability of the self-deforming sticker. For example, the self-deforming sticker can be configured to separate into pieces or fragments if a user attempts to remove it.

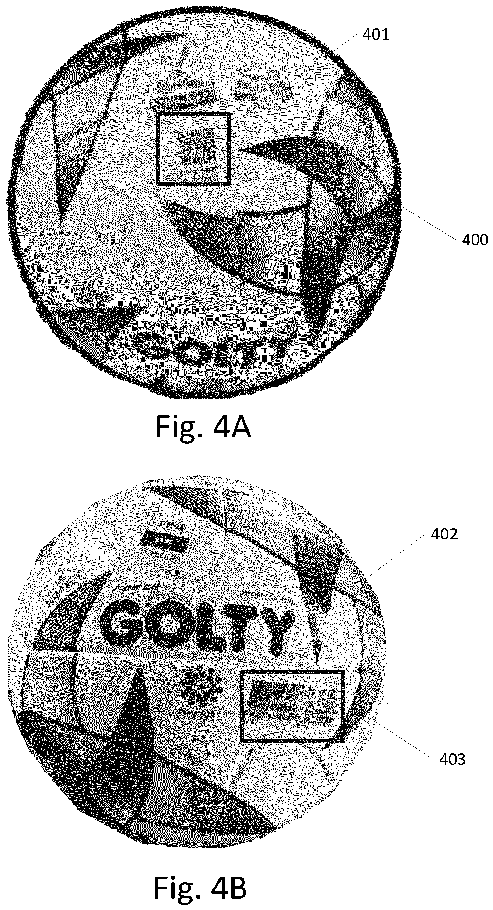

Figs. 4A-4B illustrate example of game balls with physical representations of unique identifiers according to an exemplary embodiment. Ball 400 includes a unique QR code 401 that is integral to the ball 400. Additionally, ball 402 includes a unique QR code 403 that is part of a sticker affixed to the ball 402.

Referring to Fig. 1, at step 102 a message indicating a scoring event is received, the message including a scoring ball unique identifier. In practice, the unique identifier on a scoring ball can be scanned by a remote computing device after a scoring event and sent to the server/systems of the scoring ball authentication system (e.g., over a wireless or mobile network). The unique identifier can also be input to the remote computing device in other ways, for example, by a remote user typing in a serial number.

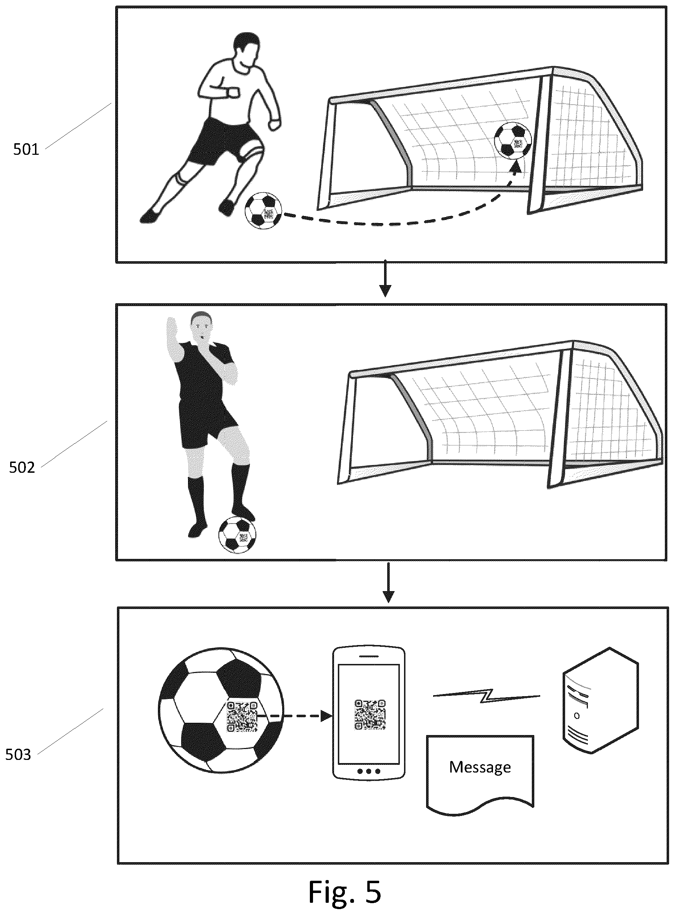

Fig. 5 illustrates an example of the scoring ball message sending and receiving process according to an exemplary embodiment. As shown in box 501 a scoring event occurs when a player scores with the ball (in this case a soccer player scoring a goal). The referee or another designated official or user can then remove the scoring ball from the field of play, as shown in box 502 in order inter alia to input the scoring ball's unique identifier into a remote scoring device, as shown in box 503. The unique identifier on the scoring ball can be scanned (e.g., with a scanner or mobile phone application) or otherwise input to a remote computing device and then packaged into a message that indicates the scoring event and transmitted to the system server or database. In the example shown in Fig. 5, the message indicating the scoring event includes a scanned copy of the physical representation of the unique identifier.

Returning to Fig. 1, at step 103 a game ball in the plurality of game balls is identified based at least in part on the scoring ball unique identifier. This step can include identifying a data structure that corresponds to the physical ball that was used in the scoring event.

At step 104 a scoring record designating the identified game ball as a scoring ball is generated, the scoring record being linked to the scoring ball unique identifier. The scoring record includes data indicating that the game ball was used in a particular scoring event. The scoring record can optionally include the scoring ball unique identifier. As discussed below, the scoring record can include additional information, such as authenticity data and scoring event data.

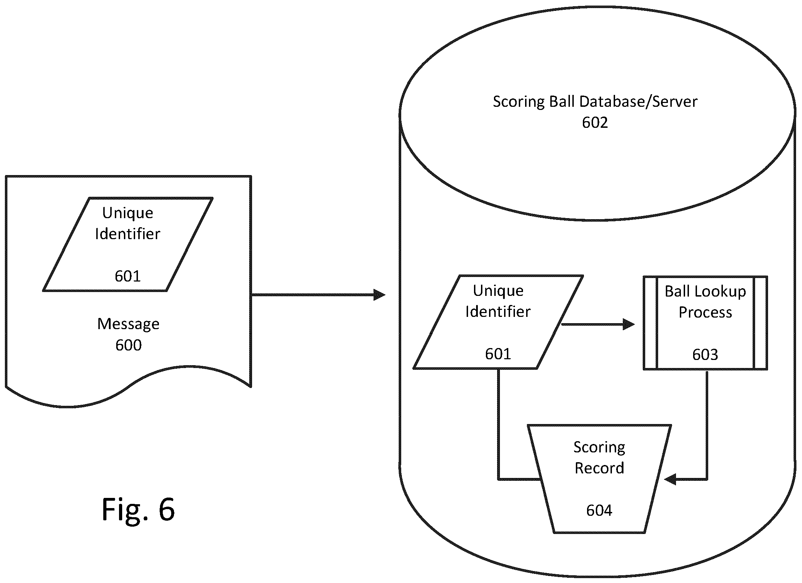

Fig. 6 illustrates an example of the game ball identification process and scoring record generation process according to an exemplary embodiment. As shown in Fig. 6, a message 600 including unique identifier 601 is received by the scoring ball database/server 602. The unique identifier 601 is then passed to a ball lookup process 603. The ball lookup process 603 then performs a lookup process by comparing the received unique identifier with the stored unique identifiers to identify which game ball was used in the scoring event. The ball lookup process can validate that the received unique identifier is a legitimate unique identifier associated with a true game ball. Once the appropriate ball and unique identifier are determined, scoring record 604 is generated, indicating that the game ball corresponding to unique identifier 601 was used in a scoring event (i.e., that the game ball corresponding to unique identifier 601 is a scoring ball). As shown in Fig. 6, scoring record 604 is linked to unique identifier 601.

The message that is sent by the remote device to the scoring ball database/server with the unique identifier can include one or more items of scoring event data relating to the scoring event itself. Alternatively, one or more additional messages can be sent with the scoring event data. The one or more items of scoring event data can include information relating to one or more scoring players (e.g., name, number, biographical details, statistics, etc.), information relating to one or more assisting players (e.g., name, number, biographical details, statistics, etc.), information relating to a game in which the scoring event occurred (e.g., teams, current score at the time of the score), information relating to one or more opponent players (e.g., goalie, defender, name, number, biographical details, statistics, etc.), information relating to one or more teams playing in a game in which the scoring event occurred (e.g., team name, logo, city, record, etc.), audio content relating to the scoring event (e.g., game audio, announcer audio, crowd noise, etc.), one or more images relating to the scoring event (e.g., pictures of the score, the scoring player, before and after events, etc.), and/or audiovisual content relating to the scoring event (e.g., video clips, gifs or other short video formats, with or without sound. The one or more items of scoring event data can then be stored as part of the scoring record linked to the scoring ball unique identifier.

The message that is sent by the remote device to the scoring ball database/server with the unique identifier can include one or more items of authenticity data relating to an authenticity of the scoring ball itself. Alternatively, one or more additional messages can be sent with the authenticity data. The one or more items of authenticity data can include one or more images of the scoring event including the scoring ball, audiovisual content of the scoring event including the scoring ball, one or more images of the scoring ball including the scoring ball unique identifier, audiovisual content of the scoring ball including the scoring ball unique identifier, audiovisual content of the scoring ball being removed from a field of play after the scoring event, and/or audiovisual content of a chain of custody of the scoring ball after the scoring event. The one or more items of authenticity data can then be stored as part of the scoring record linked to the scoring ball unique identifier.

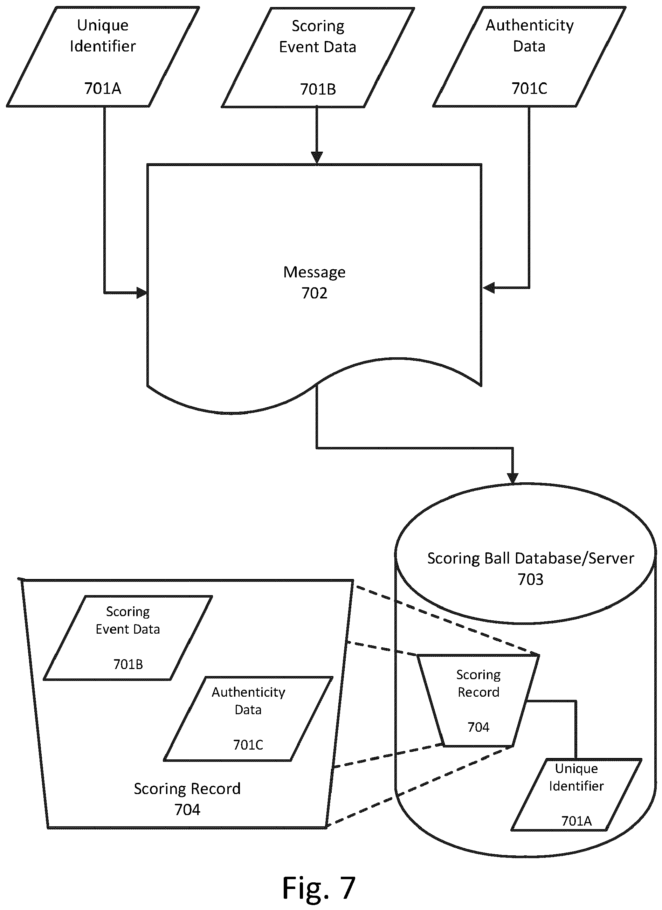

Fig. 7 illustrates an example of receiving scoring event data and authenticity data according to an exemplary embodiment. Message 702 includes unique identifier 701A, scoring event data 701B, and authenticity data 701C. The message 702 is transmitted to scoring ball database/server 703 and is then parsed, formatted, and stored in the scoring ball database/server as a scoring record 704. As shown in Fig. 7, the scoring record 704 is linked to the unique identifier 701A and contains scoring event data 701B and authenticity data 701C.

Ordinarily, memorabilia such as game balls are bought and sold by collectors. The present system provides users with the ability to prove ownership through a linkage of each scoring all with a digital asset, such as a non-fungible token (NFT) or other crypto asset. The NFT itself functions as an asset and can be bought or sold by collectors independently from, or in conjunction with, the physical scoring ball.

Alternatively, ownership can be tracked on the scoring ball server by recording and updating the current ownership of each scoring ball in the scoring record any time a transaction involving the scoring ball occurs. For example, an encrypted file can store which users (e.g., name, username, password) are owners of certain balls.

An advantage of utilizing NFTs and a distributed ledger is that tracking of ownership by the scoring ball server is not required. The server can simply query the blockchain to determine a current owner of any particular scoring ball. For example, the server can store a mapping between unique identifiers corresponding to scoring balls and NFT identifiers corresponding to the same scoring balls. When a unique identifier is received, the corresponding NFT identifier can be used to look up ownership.

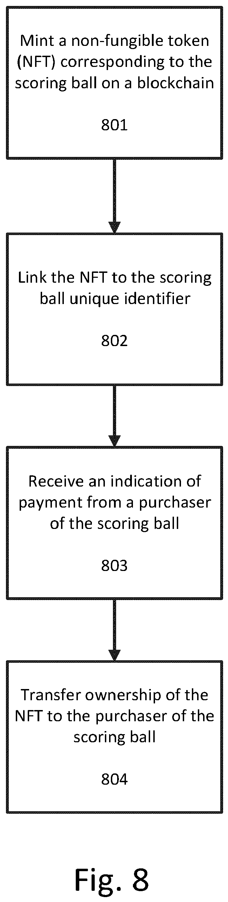

Fig. 8 illustrates a flowchart for linking the scoring ball to an NFT and transferring ownership of the NFT according to an exemplary embodiment. At step 801 a non-fungible token (NFT) corresponding to the scoring ball is minted on a blockchain (e.g. a distributed ledger). The blockchain can be any suitable chain, such as the Ethereum chain, a sidechain of another chain, or a private blockchain.

The NFT corresponding to the scoring ball can be minted in a number of ways. The NFT can be minted based at least in part on the scoring ball unique identifier, information in the scoring ball record, or some combination of the two. For example, a photograph of the scoring ball with the unique identifier can be used as the digital file input to the NFT minting process. Alternatively, the NFT can be minted based on an arbitrary digital file.

Upon initial minting, the NFT can be associated with a crypto wallet (i.e., a private key) of an administrator of the scoring ball server or an account associated with the scoring ball server. In other words, the scoring ball server can be the initial owner of the NFT. Alternatively, a third party could be used to mint the NFT and act as the initial owner/custodian of the NFT.

At step 802 the minted NFT is linked to the scoring ball unique identifier. The minted NFT can be associated with the scoring ball and/or the corresponding unique identifier in a number of ways. For example, the NFT metadata can include information about the scoring ball, the scoring event, the authenticity of the scoring ball, or the unique identifier. In this case, the minting step and the linking step are performed at the same time - the relevant metadata is provided to the minting process. Additionally or alternatively, the scoring ball server can store a mapping between each NFT identifier and a unique identifier of a corresponding scoring ball.

At step 803 an indication of payment from a purchaser of the scoring ball is received. This can be the initial purchaser of the actual physical ball. The indication of payment can be a payment confirmation, credit card transaction, cash settlement, or some other financial transaction.

At step 804 ownership of the NFT is transferred to the purchaser of the scoring ball based at least in part on receiving the indication of payment. This transaction can be performed using a private key of the current owner (e.g., the scoring ball server/platform, another administrator, or a custodian) to sign the transaction. The NFT is then associated with the crypto wallet of the purchaser.

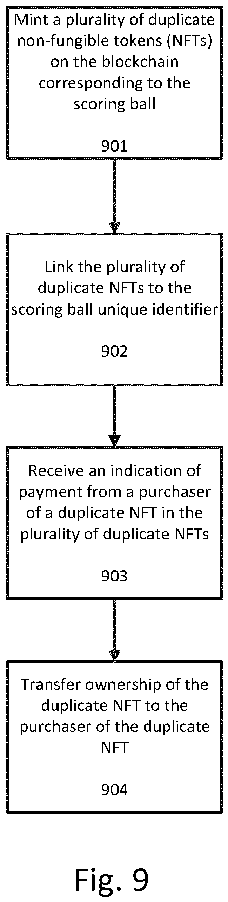

Fig. 9 illustrates a flowchart for linking the scoring ball to a plurality of duplicate NFTs and transferring ownership of the duplicate NFTs according to an exemplary embodiment. This process is similar to that shown in Fig. 8, with some minor differences. At step 901 a plurality of duplicate non-fungible tokens (NFT) corresponding to the scoring ball are minted on a blockchain (e.g. a distributed ledger). The blockchain can be any suitable chain, such as the Ethereum chain, a sidechain of another chain, or a private blockchain.

The duplicate NFTs corresponding to the scoring ball can be minted in a number of ways. The duplicate NFTs can be minted based at least in part on the scoring ball unique identifier, information in the scoring ball record, or some combination of the two. For example, a photograph of the scoring ball with the unique identifier can be used as the digital file input to the NFT minting process. Alternatively, the duplicate NFTs can be minted based on arbitrary digital files.

Upon initial minting, the duplicate NFTs can be associated with a crypto wallet (i.e., a private key) of an administrator of the scoring ball server or an account associated with the scoring ball server. In other words, the scoring ball server can be the initial owner of the duplicate NFTs. Alternatively, a third party could be used to mint the duplicate NFTs and act as the initial owner/custodian of the duplicate NFTs.

At step 902 the minted duplicate NFTs are linked to the scoring ball unique identifier. The minted duplicate NFTs can be associated with the scoring ball and/or the corresponding unique identifier in a number of ways. For example, the NFT metadata for each duplicate NFT can include information about the scoring ball, the scoring event, the authenticity of the scoring ball, or the unique identifier. In this case, the minting step and the linking step are performed at the same time - the relevant metadata is provided to the minting process. Additionally or alternatively, the scoring ball server can store a mapping between each NFT identifier of each duplicate NFT and a unique identifier of a corresponding scoring ball.

At step 903 an indication of payment from a purchaser of a duplicate NFT is received. Unlike the initial (or primary) NFT, the duplicate NFTs can be sold or otherwise distributed independently of the scoring ball and do not denote ownership of the scoring ball. However, as discussed further below, the duplicate NFTs can confer privileges on their owners on the scoring ball server/platform. The indication of payment can be a payment confirmation, credit card transaction, cash settlement, or some other financial transaction.

At step 904 ownership of the duplicate NFT is transferred to the purchaser of the scoring ball based at least in part on receiving the indication of payment. This transaction can be performed using a private key of the current owner (e.g., the scoring ball server/platform, another administrator, or a custodian) to sign the transaction. The duplicate NFT is then associated with the crypto wallet of the purchaser.

The scoring ball server and platform can provide various services to users, including lookup of scoring balls and scoring data associated with scoring balls, lookup of authenticity information, lookup of ownership information, etc. The scoring ball platform can also generate three-dimensional models of the scoring ball and allow users to view and interact with the three dimensional models. Certain users can also be granted special privileges with respect to the three dimensional model. For example, users possessing an NFT or duplicate NFT can be given the privilege of importing and/or interacting with the three dimensional model in an augmented reality application.

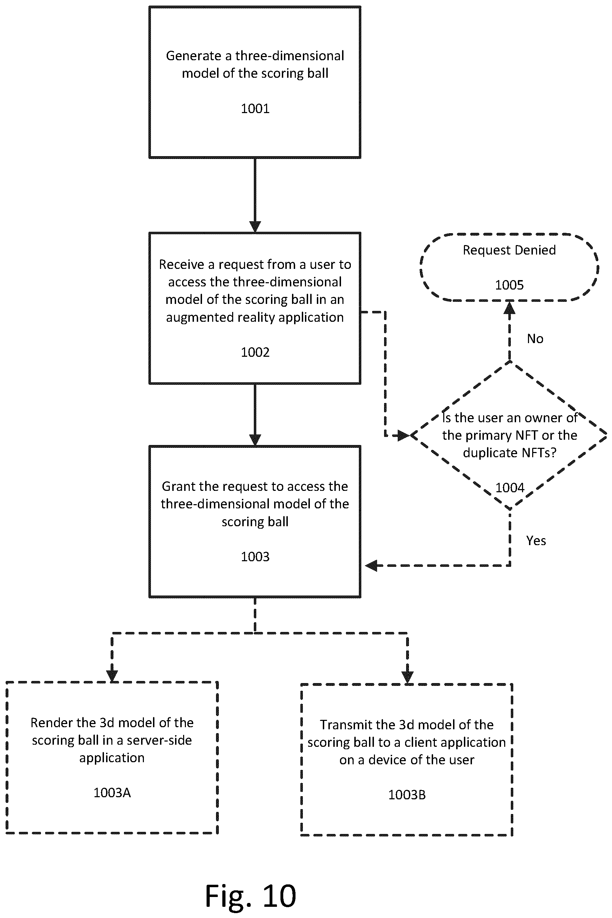

Fig. 10 illustrates a flowchart for granting users access to a three dimensional model of a scoring ball according to an exemplary embodiment. At step 1001 a three-dimensional model of the scoring ball is generated. The model can be generated based on photos of the ball from multiple angles, preexisting models, and/or scanning of the scoring ball.

At step 1002 a request is from a user to access the three-dimensional model of the scoring ball in an augmented reality application. The request can include the unique identifier of the scoring ball and, optionally, a user identifier or other user information. The augmented reality application can be a client-side application on the user's device and/or an application hosted on a server, such as the scoring ball server.

At step 1003 the request to access the three-dimensional model of the scoring ball can be granted and the user can be provided with access to the three dimensional model in the augmented reality application.

Optionally, this feature can be reserved for users with special privileges, such as the owner of the primary NFT or one of the duplicate NFTs. In this case, then at step 1004 (after step 1002) it is determined whether the user is an owner of the primary NFT or the duplicate NFTs corresponding to the scoring ball.

As discussed earlier, this can be performed by looking up the NFT identifier and/or duplicate NFT identifiers based on the unique identifier in the request and querying the blockchain for the current owners. The current owners can then be compared with the user information/user identifier to determine if the user is a current owner. In this variation, if the user is not an owner of either the primary NFT or the duplicate NFTs, then at step 1005 the request is denied. If it cannot be determined whether the user is an owner (e.g., user information was not provided), then the request can also be denied.

If the user is an owner of the primary NFT or one of the duplicate NFTs, then at step 1003 the request to access the three-dimensional model of the scoring ball in an augmented reality application is granted based at least in part on a determination that the user is an owner of the NFT or a duplicate NFT in the plurality of duplicate NFTs.

Regardless of whether the user is required to have an NFT/duplicate NFT or not, step 1003 can include sub-step 1003A and/or sub-step 1003B. At step 1003A the three-dimensional model of the scoring ball is rendered in a server-side application and accessible to the user on a corresponding client-side device (e.g., via a browser applet or mobile app). At step 1003B the three-dimensional model of the scoring ball is transmitted to an application on a device of the user. In this case, the model is not rendered server side but the data for the model is sent to the user device and rendered locally.

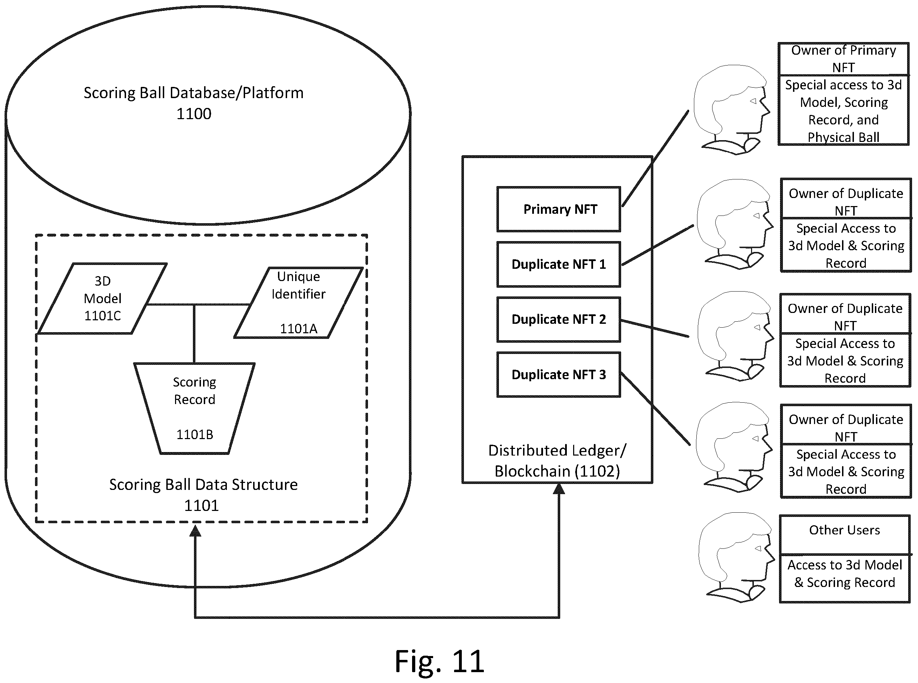

Fig. 11 illustrates a system diagram of the scoring ball database/platform, the corresponding NFTs, and corresponding user access rights according to an exemplary embodiment. Scoring ball platform 1100 can optionally include a scoring ball data structure to act as a container for all data pertaining to a particular scoring ball. Optionally, this data structure can be omitted. Scoring ball platform 1100 includes a unique identifier 1101A, scoring record 1101B, and 3d model 1101C, all of which are linked together.

Each scoring ball (e.g., unique identifier) is linked to corresponding NFTs on a distributed ledger/blockchain 1102. In this case, there is a primary NFT and three duplicate NFTs. The user icons next to the NFTs indicate ownership of the NFTs and corresponding privileges according to an exemplary embodiment. As shown, the owner of the primary NFT can have special access to the 3d model (e.g., in an augmented reality application), access to the scoring record, and physical possession of the scoring ball. The owners of the duplicate NFTs do not have physical possession of the scoring ball but have the other privileges, including special access to the 3d model. Finally, a user that does not have any NFTs can have some access to the 3d model (e.g., viewing, limited interaction) and access to the scoring record.

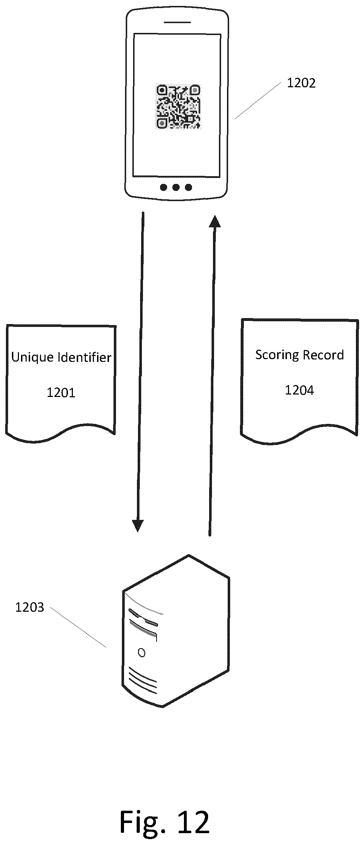

Fig. 12 illustrates a method for retrieving a scoring record according to an exemplary embodiment. As shown in Fig. 12, the user device 1202 captures the unique identifier of the ball (e.g., from an image, website, or the physical ball) and transmits the scoring ball unique identifier 1201 to the scoring ball server/platform 1203. The scoring ball server/platform 1203 receives the scoring ball unique identifier from the user device 1202. The scoring ball server/platform 1203 then transmits at least a portion of the scoring record 1204 linked to the scoring ball unique identifier 1201 to the user device 1202. The scoring record data can sent, for example, in a mobile application executing on the user device 1202 or in a web browser of a browser executing on the user device 1202.

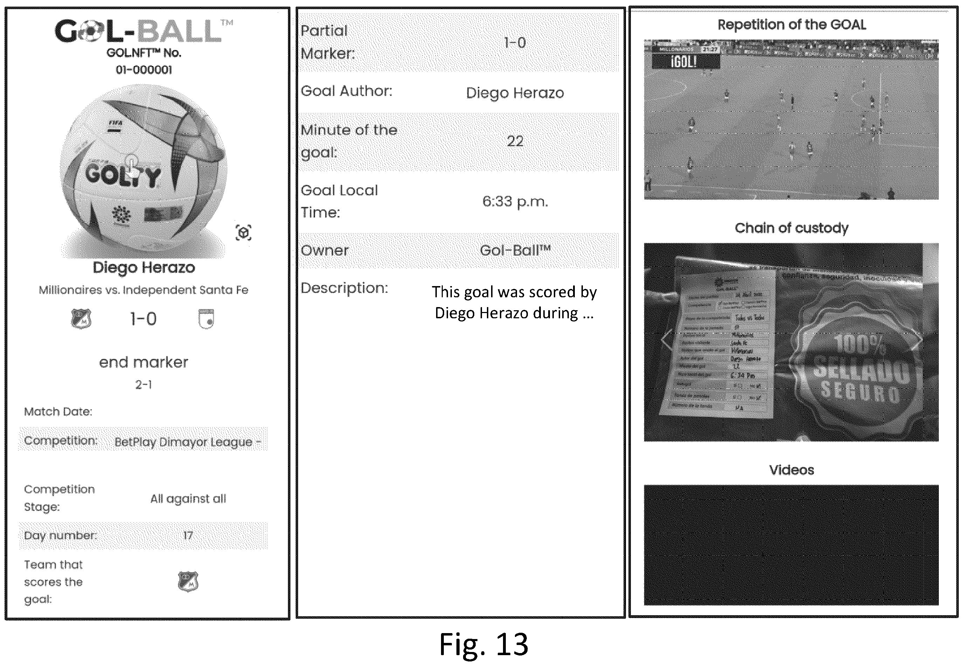

Fig. 13 illustrates an example of a scoring record linked to the scoring ball unique identifier according to an exemplary embodiment. As shown in Fig. 13, the scoring record includes match information, team information, scoring player information, scoring event details, description of the scoring event, video content of the scoring event (e.g., a GIF and other video) and video evidence of the chain of custody after the scoring event

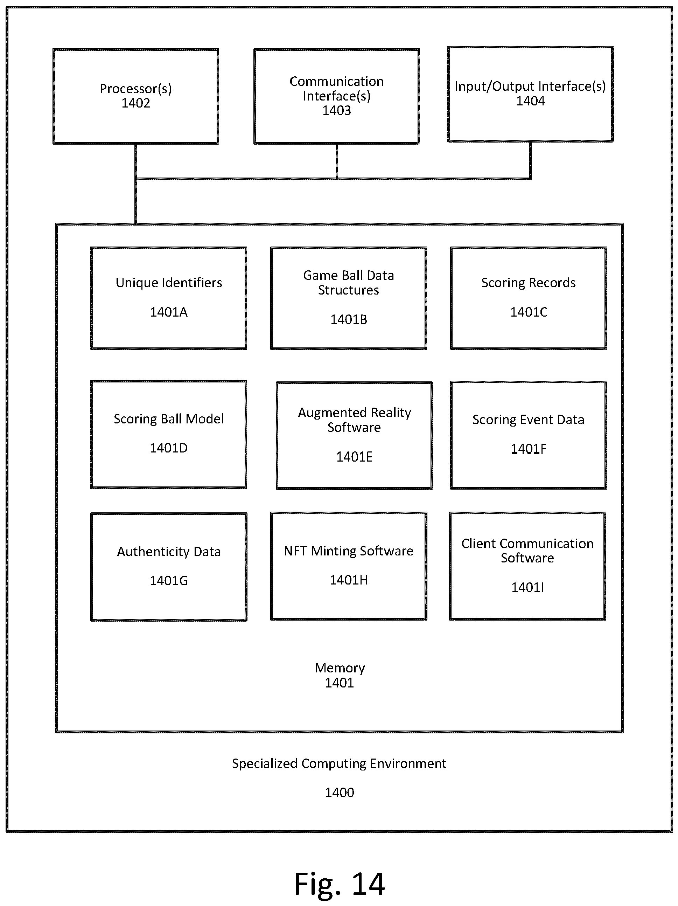

One or more of the above-described techniques can be implemented in or involve one or more special-purpose computer systems having computer-readable instructions loaded thereon that enable the computer system to implement the above-described techniques. Fig. 14 illustrates an example of a specialized computing environment 1400 that can be used to implement the above-described processes according to an exemplary embodiment. The specialized computing environment 1400 is not intended to suggest any limitation as to scope of use or functionality of a described embodiment(s).

With reference to Fig. 14, the computing environment 1400 includes at least one processing unit/controller 1402 and memory 1401. The processing unit 1402 executes computer-executable instructions and can be a real or a virtual processor. In a multi-processing system, multiple processing units execute computer-executable instructions to increase processing power. The memory 1401 can be volatile memory (e.g., registers, cache, RAM), non-volatile memory (e.g., ROM, EEPROM, flash memory, etc.), or some combination of the two. The memory 1401 can store software and data used for implementing the above-described techniques, including unique identifiers 1401A, game ball data structures 1401B, scoring records 1401C, scoring ball model 1401D, augmented reality software 1401E, scoring event data 1401F, authenticity data 1401G, NFT minting software 1401H, and client communication software 14011.

All of the software stored within memory 1401 can be stored as (a) computer-readable instruction(s), that when executed by one or more processor(s) 1402, cause(s) the processor(s) to perform the functionality described with respect to Figs. 1-13.

Processor(s) 1402 execute computer-executable instructions and can be a real or virtual processors. In a multi-processing system, multiple processors or multicore processors can be used to execute computer-executable instructions to increase processing power and/or to execute certain software in parallel.

Specialized computing environment 1400 additionally includes a communication interface 1403, such as a network interface, which is used to communicate with devices, applications, or processes on a computer network or computing system, collect data from devices on a network, and implement encryption/decryption actions on network communications within the computer network or on data stored in databases of the computer network. The communication interface conveys information such as computer-executable instructions, audio or video information, or other data in a modulated data signal. A modulated data signal is a signal that has one or more of its characteristics set or changed in such a manner as to encode information in the signal. By way of example, and not limitation, communication media include wired or wireless techniques implemented with an electrical, optical, RF, infrared, acoustic, or other carrier.

Specialized computing environment 1400 further includes input and output interfaces 1404 that allow users (such as system administrators) to provide input to the system to set parameters, to edit data stored in memory 1401, or to perform other administrative functions.

An interconnection mechanism (shown as a solid line in Fig. 14), such as a bus, controller, or network interconnects the components of the specialized computing environment 1400.

Input and output interfaces 1404 can be coupled to input and output devices. For example, Universal Serial Bus (USB) ports can allow for the connection of a keyboard, mouse, pen, trackball, touch screen, or game controller, a voice input device, a scanning device, a digital camera, remote control, or another device that provides input to the specialized computing environment 1400.

Specialized computing environment 1400 can additionally utilize a removable or non-removable storage, such as magnetic disks, magnetic tapes or cassettes, CD-ROMs, CD-RWs, DVDs, USB drives, or any other medium which can be used to store information and which can be accessed within the specialized computing environment 2800.

Having described and illustrated the principles of our invention with reference to the described embodiment, it will be recognized that the described embodiment can be modified in arrangement and detail without departing from such principles. Elements of the described embodiment shown in software can be implemented in hardware and vice versa.

In view of the many possible embodiments to which the principles of our invention can be applied, we claim as our invention all such embodiments as can come within the scope and spirit of the following claims and equivalents thereto.

## Claims

1. A method executed by one or more computing devices for certifying authenticity of a scoring ball (302) in a sports game, the method comprising:
• storing (101) a plurality of unique identifier (201A, 202A, 203A, 301, 401, 403) corresponding to a plurality of game balls (201B, 202B, 203B, 302, 400, 402) used in the sports game, each unique identifier (301) corresponding to a unique game ball (302) in the plurality of game balls;
• receiving (102) a message indicating a scoring event involving a game ball of the plurality of game balls, the message comprising a scoring ball unique identifier (301) corresponding to the game ball involved in the scoring event;
• identifying (103) the game ball (302) involved in the scoring event amongst the plurality of game balls based at least in part on the scoring ball unique identifier (301); and
• generating (104) a scoring record designating the identified game ball (302) as a scoring ball, the scoring record being linked to the scoring ball unique identifier (301).

2. The method of claim 1, wherein the plurality of unique identifiers (201A, 202A, 203A, 301, 401, 403) comprise one or more of:
• a plurality of unique Quick Response (QR) codes;
• a plurality of unique bar codes;
• a plurality of unique serial numbers;
• a plurality of radio frequency identifiers; or
• a plurality of infrared tags.

3. The method of claim 1 or 2, wherein each game ball in the plurality of game balls comprises a physical representation of the game ball's unique identifier (301).

4. The method of claim 3, wherein the physical representation of the game ball's unique identifier (401) is integral to that game ball (400).

5. The method of claim 3, wherein the physical representation of the game ball's unique identifier (403) is affixed to that game ball (402).

6. The method of any of claims 3 to 5, wherein the message (600) indicating a scoring event comprises a scanned copy of the physical representation of the unique identifier (601).

7. The method of any of the preceding claims, wherein the message (600) comprises one or more items of authenticity data (701C) relating to an authenticity of the scoring ball, the one or more items of authenticity data comprising one or more of:
• content relating to a chain of custody of the scoring ball after the scoring event;
• one or more images of the scoring event including the scoring ball;
• audiovisual content of the scoring event including the scoring ball;
• one or more images of the scoring ball including the scoring ball unique identifier;
• audiovisual content of the scoring ball including the scoring ball unique identifier;
• audiovisual content of the scoring ball being removed from a field of play after the scoring event; or
• audiovisual content of a chain of custody of the scoring ball after the scoring event;
the method optionally comprising storing at least one of the one or more items of authenticity data in the scoring record linked to the scoring ball unique identifier (601).

8. The method of any of claims 1 to 7, comprising:
• generating a three-dimensional model of the scoring ball (1001);
• receiving a request from a user to access the three-dimensional model of the scoring ball (1002);
• granting the request to access the three-dimensional model of the scoring ball (1003).

9. The method of claim 8, wherein granting the request to access the three-dimensional model of the scoring ball comprises one of:
• rendering the three-dimensional model of the scoring ball in an application hosted on at least one of the one or more computing devices (1003A); or
• transmitting the three-dimensional model of the scoring ball to an application on a device of the user, the application optionally comprising an augmented reality application (1003B).

10. The method of any of the preceding claims, comprising:
• minting one or more non-fungible token(s) (NFT(s)) corresponding to the scoring ball on a blockchain (901); and
• linking the one or more NFT(s) to the scoring ball unique identifier (902), wherein the one or more NFT(s) is/are optionally minted based at least in part on:
∘ the scoring ball unique identifier and/or
∘ information in the scoring ball record.

11. The method of claim 10, comprising:
• receiving an indication of payment from a purchaser of the scoring ball (903); and
• transferring ownership of at least one NFT of the one or more NFT(s) to the purchaser of the scoring ball (904).

12. The method of claim 11, wherein:
• the request from the user to access the three-dimensional model of the scoring ball is a request to access the three-dimensional model of the scoring ball in an augmented reality application;
• the request to access the three-dimensional model of the scoring ball is granted based at least in part on a determination (1004) that the user is an owner of at least one of the one or more NFT(s).

13. The method of any of the preceding claims, comprising:
• receiving the scoring ball unique identifier from a user device (1201); and
• transmitting at least a portion of the scoring record linked to the scoring ball unique identifier to the user device (1204).

14. A non-transitory computer-readable storage medium comprising computer program instructions which, when executed by one or more processors (1402), causes the one or more processors to carry out a method according to any one of the preceding claims.

15. A computing apparatus (1400) arranged to carry out a method according to any one of claims 1 to 13.
